# EUROPÄISCHE PATENTSCHRIFT

(11) **EP 1 586 159 B1**
(45) Veröffentlichungstag und Bekanntmachung des Hinweises auf die Patenterteilung: **03.07.2013**
(21) Anmeldenummer: 04700985.7
(22) Anmeldetag: 09.01.2004
(51) Int. Cl.: H02P 6/18

(54) **Verfahren zur Ermittlung der Rotorlage eines elektronisch kommutierten Gleichstrommotors**
Method for determining the rotor position of an electronically-commutated dc motor
Procédé permettant de déterminer la position du rotor d'un moteur à courant continu à commutation électronique

(30) Priorität: 10.01.2003 DE 10300634
(43) Veröffentlichungstag der Anmeldung: 19.10.2005
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GSCHOSSMANN, Günther, 85232 Bergkirchen/Lauterbach (DE)
(74) Vertreter: Mattusch, Gundula
(86) Internationale Anmeldenummer: PCT/EP2004/000094
(87) Internationale Veröffentlichungsnummer: WO 2004/064242

(56) Entgegenhaltungen:
- US-B1- 6 250 434
- JANG G H ET AL: "Position detection and start-up algorithm of a rotor in a sensorless BLDC motor utilising inductance variation" IEE PROCEEDINGS: ELECTRIC POWER APPLICATIONS, INSTITUTION OF ELECTRICAL ENGINEERS, GB, Bd. 149, Nr. 2, 11. März 2002 (2002-03-11), Seiten 137-142, XP006017909 ISSN: 1350-2352

## Beschreibung

Die Erfindung betrifft ein Verfahren zur Steuerung eines elektronisch kommutierten Gleichstrommotors nach dem Oberbegriff des Anspruchs 1.

Ein solches Verfahren ist aus dem Artikel von JANG G H ET AL: "Position detection and start-up algorithm of a rotor in a sensorless BLCD motor utilizing inductance variation" IEE PROCEEDINGS: ELECTRIC POWER APLLICATIONS, INSTITU-TION OF ELECTRICWL ENGINEERS, GB, Bd. 149, Nr. 2, 11. März 2002, S.137 - 142 XP 006017909 ISSN: 1350 -1352 bekannt.

Es sind verschiedene Verfahren zur Steuerung elektrisch kommutierter Gleichstrommotoren bekannt, bei welchen ohne Einsatz eines Positionssensors aus direkt messbaren elektrischen Größen wie Strom oder Spannung die Drehwinkellage und/oder Position des Rotors bestimmt wird.

So offenbart es die EP 0 536 113, aus einer Induktivitätsmessung die Rotorposition zu bestimmen. Dieses Verfahren zeichnet sich durch eine hohe Genauigkeit bei einem relativ hohen Bedarf an Rechenleistung aus.

Die Erfindung hat gegenüber dem gattungsgemäßen Stand der Technik die Aufgabe, das gattungsgemäße Verfahren derart weiterzuentwickeln, dass vorzugsweise bei Verringerung des Bedarfs an Rechenleistung eine zufriedenstellende Positionserkennung bei verschiedensten Drehzahlen des Rotors erreicht wird.

Die Erfindung löst diese Aufgabe durch den Gegenstand des Anspruchs 1.

Vorteilhafte Ausgestaltungen sind den Unteransprüchen zu entnehmen.

Es ist vorteilhaft, dass derart zwei oder mehr Ermittlungsverfahren miteinander kombiniert werden, von denen das eine bei niedrigen Drehzahlen besonders gut arbeitet, während das andere bei höheren Drehzahlen genauer ist. Gerade bei der Anwendung an einer Nachstelleinrichtung einer Scheibenbremse ist die Position des Rotors stets genau zu bestimmen, um einen fehlerhaften Betrieb der Nachstellvorrichtung zu gewährleisten. Dies gilt insbesondere, da an der Scheibenbremse nur eine begrenzte Rechnerleistung zur Verfügung steht.

Die Erfindung eignet sich insbesondere zur Ansteuerung eines kommutierten Gleichstrommotors, der als Antrieb einer Nachstelleinrichtung einer vorzugsweise - ansonsten, bis auf die Funktion der Nachstellung - pneumatisch betätigten Scheibenbremse eingesetzt wird, wie sie beispielsweise aus der PCT/EP01/09367 bekannt ist.

Zwar ist es an sich bekannt (siehe den Artikel "Neue Kommutierungselektronik für geräuscharm betriebene bürstenlose Elektromotoren", Antriebstechnik 40,2001, Nr. 10), die Rotorposition nicht nur mittels einer Induktivitätsmessung sondern aus der induzierten Spannung in der unbestromten Wicklung zu bestimmen. Bekannt ist auch, dass dieses Verfahren eine geringere Rechenleistung als die Bestimmung mittels Induktivitätsmessung erfordern. Daher kann der Prozessor kleiner und damit kostengünstiger günstiger ausgelegt werden.

Andererseits ist es auch bekannt, dass das letztgenannte Verfahren nur ab bestimmten Drehzahlen genaue, brauchbare Resultate liefert.

Bei einem erneuten Unterschreiten eines Mindestdrehgeschwindigkeit wird daher nach einer Variante der Erfindung wiederum auf das insbesondere bei niedrigeren Drehzahlen gut arbeitende, aber rechnerleistungsintensivere - und deshalb eher für niedrige Drehzahlen geeignetere - Verfahren zur Induktivitätsmessung umgeschaltet.(EP 0 536 113).

Vorteilhaft ist, dass auch bei der Drehzahl Null ein Ergebnis zur Verfügung steht, was insbesondere in der Anwendung an einer Bremse von Vorteil ist.

Nachfolgend wird die Erfindung anhand der Zeichnung unter Bezug auf die Ausführungsbeispiele näher beschrieben. Es zeigt:
Fig. 1 eine schematische Darstellung des erfindungsgemäßen Steuerungsverfahrens; und
Fig. 2 eine Schnittdarstellung durch eine pneumatisch betätigte Scheibenbremse mit elektromechanischer Nachstellfunktion.

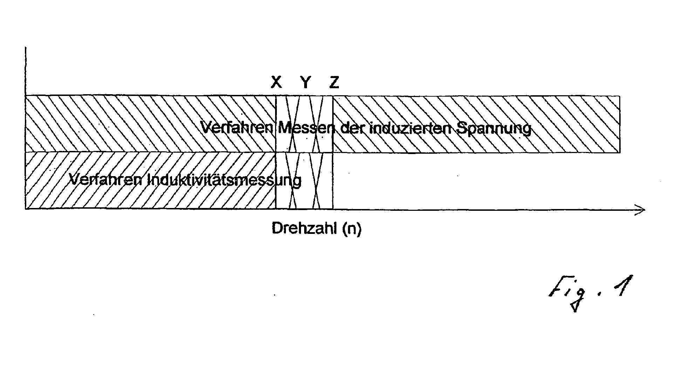

Wie aus Fig. 1 zu erkennen, werden bei niedrigen Drehzahlen kleiner Z sowohl das Verfahren der Messung der induzierten Spannung als auch das Verfahren der Induktivitätsmessung eingesetzt. Alternativ, als nicht erfindungsgemäβe Steuerung, wäre es unterhalb einer empirisch zu ermittelnden Grenzwertdrehzahl (hier nicht eingezeichnet) theoretisch auch denkbar, das Verfahren zur Messung der induzierten Spannung abzuschalten.

Oberhalb der Drehzahl Z wird nur das Verfahren der induzierten Spannung eingesetzt.

Die Drehzahl Z wird dadurch ermittelt, dass jeweils die Differenz zwischen den Resultaten der beiden Ermittlungsverfahren ermittelt wird. Da bekannt ist, dass das Verfahren zur Messung der induzierten Spannung bei niedrigen Drehzahlen nicht zufriedenstellend arbeitet, wird bei niedrigen Drehzahlen im Parallelbetrieb beider Verfahren das Ergebnis der Induktivitätsmessung mit dem der Messung g der induzierten Spannung fortlaufend verglichen.

Wird einvorgegebener Sollgrenzwert zwischen diesen beiden Werten bei einer Drehzahl X unterschritten, ist davon auszugehen, dass die Drehzahl nunmehr genügend groß ist, um allein auf das Verfahren der Messung der induzierten Spannung umzuschalten.

Sicherheitshalber erfolgt das Umschalten auf den Alleinbetrieb der Verfahren der Messung der induzierten Sonnung aber dennoch erst bei einer Drehzahl X + Y = Z, d.h., im Bereich zwischen X und Z werden weiter beide Verfahren eingesetzt, um wirklich sicher zu sein, dass eine Drehzahl überschritten wird, bei der mit konstant guten Ergebnissen des Verfahrens der Messung der induzierten Spannung zu rechnen ist, zumal auch stets mit einem leichten Abfall der Drehzahl zu rechnen ist..

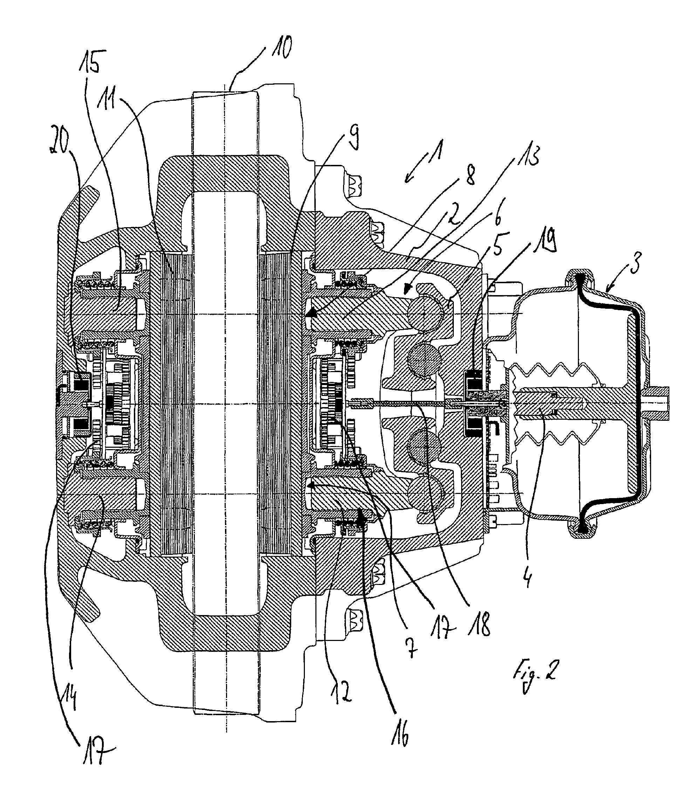

Fig. 2 zeigt eine pneumatisch betätigte Scheibenbremse 1, die einen Bremssattel 2 aufweist, an den ein Bremszylinder 3 angesetzt ist, dessen Kolbenstange 4 zur Betätigung eines exzentrisch gelagerten Drehhebels 5 einer Zuspanneinrichtung 6 dient.

Der Drehhebel 5 dient dazu, direkt oder indirekt über Zwischenelemente wenigstens eins, hier zwei Druckstücke 7,8 in Richtung eines Bremsbelages 9 zu verschieben, um diesen bei Bremsungen gegen eine z.B. axial verschiebliche Bremsscheibe 10 zu drücken, die sodann infolge der Auslegung des Bremssattels 2 als Festsattel gegen den weiteren Bremsbelag 11 auf der anderen Seite der Bremsscheibe 10 verschoben wird.

Zur Nachstellung von Belagverschleiß können auf jeder Seite der Bremsscheibe je zwei Nachstelleinrichtungen 12, 13, 14, 15 vorhanden, die jeweils elektromechanisch angetrieben werden. Sie bestehen hier aus einer in sich verschraubbaren und damit längenverstellbaren Spindel-/Hülsenanordnung 16, auf welche jeweils auf jeder Seite der Bremsscheibe über ein Getriebe 17 und/oder eine Antriebsverbindung 18 ein Elektromotor 19, 20 einwirkt. Zur Ansteuerung dieser Elektromotoren für solche oder ähnliche Bremsen eignet sich das Verfahren der Fig. 1 in besonderer. Es kann auf einem "kleinen" und wenig Rechenleistung aufweisenden Steuerungsrechner direkt an der Bremse ablaufen (hier nicht abgebildet) oder auf einem Steuergerät der Bremse bzw. einer übergeordneten Bremsanlage eines Fahrzeuges (z.B. ABS, EBS).

**Bezugszeichen**

| | |
|---|---|
| Scheibenbremse | 1 |
| Bremssattel | 2 |
| Bremszylinder | 3 |
| Kolbenstange | 4 |
| Drehhebel | 5 |
| Zuspanneinrichtung | 6 |
| Druckstücke | 7, 8 |
| Bremsbelag | 9 |
| Bremsscheibe | 10 |
| Bremsbelag | 11 |
| Nachstelleinrichtungen | 12, 13, 14, 15 |
| Spindel-/Hülsenanordnung | 16 |
| Getriebe | 17 |
| Antriebsverbindung | 18 |
| Elektromotor | 19,20 |

## Patentansprüche

1. Verfahren zur Steuerung eines elektronisch kommutierten Gleichstrommotors, der wenigstens einen insbesondere permanentmagnetischen Rotor und einen bewickelten Stator aufweist, und der ein Antriebsmotor einer Nachstelleinrichtung einer pneumatisch betätigten Scheibenbremse ist, wobei die Rotorlage aus elektrisch messbaren Größen ohne Sensierung der Rotorposition ermittelt wird, wobei zwei Ermittlungsverfahren zur Ermittlung der Rotorlage aus elektrisch messbaren Größen miteinander kombiniert werden, wobei eines der Ermittlungsverfahren eine Induktivitätsmessung umfasst und wobei ein weiteres der Ermittlungsverfahren eine Messung der induzierten Spannung umfasst, **dadurch gekennzeichnet, dass** die Ermittlung der Rotorlage unterhalb einer Grenzdrehzahl Z parallel anhand der Messung der induzierten Spannung und der Induktivitätsmessung erfolgt.

2. Verfahren nach Anspruch 1, **dadurch gekennzeichnet, dass** unterhalb eines Grenzwertes die Resultate der Messung der induzierten Spannung und der Induktivitätsmessung miteinander verglichen werden.

3. Verfahren nach einem der vorstehenden Ansprüche, **dadurch gekennzeichnet, dass** oberhalb eines Grenzwertes die Ermittlung ausschließlich anhand einer Messung der induzierten Spannung erfolgt.

4. Verfahren nach einem der vorstehenden Anspruch, **dadurch gekennzeichnet, dass** der Grenzwert anhand einer Bestimmung der Differenz zwischen den Ergebnissen der beiden Ermittlungsverfahren ermittelt wird.

5. Verfahren nach Anspruch 4, **dadurch gekennzeichnet, dass** bei Unterschreiten eines vorgegebenen Solldifferenzwertes zuzüglich einer vorgegebenen Solldrehzahl die Ermittlung ausschließlich mittels einer Messung der induzierten Spannung erfolgt.

6. Verfahren nach einem der vorstehenden Ansprüche, **dadurch gekennzeichnet, dass** bei einem Unterschreiten der Grenzdrehzahl Z erneut parallel die Induktivitätsmessung und die Messung der induzierten Spannung durchgeführt werden.

## Claims

1. Method for controlling an electronically commutated DC motor which comprises at least one, in particular permanent magnetic rotor and a wound stator, and which is a drive motor of an adjusting device of a pneumatically actuated disc brake, wherein the rotor position is determined from electrically measureable values without sensing the rotor position, wherein two determination methods are combined with each other to determine the rotor position from electrically measurable values, wherein one of the determination methods includes an inductance measurement and wherein a further one of the determination methods includes a measurement of the induced voltage, **characterised in that** the determination of the rotor position takes place below the threshold speed Z in parallel by reference to the measurement of the induced voltage and the inductance measurement.

2. Method according to claim 1, **characterised in that** the results of the measurement of the induced voltage and the inductance measurement are compared with each other below a threshold value.

3. Method according to one of the preceding claims, **characterised in that** the determination takes place above a threshold value exclusively using a measurement of the induced voltage.

4. Method according to one of the preceding claims, **characterised in that** the threshold value is determined using a determination of the difference between the results of the two determination methods.

5. Method according to claim 4, **characterised in that** in case of falling short of a predefined target differential value plus a predefined target speed the determination takes place exclusively by means of a measurement of the induced voltage.

6. Method according to one of the preceding claims, **characterised in that** in case of falling short of the threshold speed Z the inductance measurement and the measurement of the induced voltage are once again carried out in parallel.

## Revendications

1. Procédé de commander un moteur à courant continu à commutation électronique, qui comprend un rotor, en particulier à aimant permanent, et un stator entouré, et qui est un moteur d'entraînement d'un dispositif rattrapage d'un frein à disque à commande pneumatique, dans lequel la position du rotor est déterminée par sa dérivation des paramètres mesurables de façon électrique, sans détection de la position du rotor, à une combinaison de deux procédés de détermination à déterminer la position du rotor par dérivation des paramètres mesurables de façon électrique, dont un de ces procédés comprend une mesure de l'inductance, pendant qu'un autre de ces procédés comprend une mesure de la tension induite, **caractérisé en ce que** la détermination de la position du rotor se fait en parallèle sur la base de la mesure de la tension induite et de la mesure de l'inductance au-dessous d'un nombre de tours limite Z.

2. Procédé selon la revendication 1, **caractérisé en ce qu'**au dessous d'une valeur limite les résultats de la mesure de la tension induite et de la mesure de l'inductance sont comparés l'un à l'autre.

3. Procédé selon une quelconque des revendications précédentes, **caractérisé en ce qu'**au dessus d'une valeur limite la détermination se fait exclusivement sur la base d'une mesure de la tension induite.

4. Procédé selon une quelconque des revendications précédentes, **caractérisé en ce que** ladite valeur limite est établie moyennant une détermination de la différence entre les résultats des eux procédés de détermination.

5. Procédé selon la revendication 4, **caractérisé en ce que** quand la valeur tombe en dessous d'une valeur de différence de consigne prédéterminée, plus un nombre de tours de consigne prédéterminé, la détermination se fait exclusivement moyennant une mesure de la tension induite.

6. Procédé selon une quelconque des revendications précédentes, **caractérisé en ce que** la valeur tombe au-dessous d'un nombre de tours limite Z, la mesure d'inductance et la mesure de la tension induite sont réalisé de nouveau en parallèle.
